# EUROPEAN PATENT SPECIFICATION

(11) **EP 4 506 217 B1**
(45) Date of publication and mention of the grant of the patent: **21.01.2026**
(21) Application number: 23190995.3
(22) Date of filing: 11.08.2023
(51) Int. Cl.: B60T 17/00, F16D 65/00

(54) **FILTER SYSTEM FOR ONE OR MORE BRAKING DEVICES OF A VEHICLE AND METHOD OF OPERATION THEREOF**
FILTERSYSTEM FÜR EINE ODER MEHRERE BREMSVORRICHTUNGEN EINES FAHRZEUGS UND VERFAHREN ZUM BETRIEB DAVON
SYSTÈME DE FILTRE POUR UN OU PLUSIEURS DISPOSITIFS DE FREINAGE D'UN VÉHICULE ET SON PROCÉDÉ DE FONCTIONNEMENT

(43) Date of publication of application: 12.02.2025
(73) Proprietor: MANN+HUMMEL Ventures Pte. Ltd., Singapore 139234 (SG)
(72) Inventor: WÖRZ, Tobias, 71636 Ludwigsburg (DE); JESSBERGER, Thomas, 71636 Ludwigsburg (DE); FALLBÖHMER, Stefan, 71636 Ludwigsburg (DE); WÖBER, Alexander, 71636 Ludwigsburg (DE)
(74) Representative: Mann + Hummel Intellectual Property

(56) References cited:
- DE-A1- 102016 117 778
- DE-A1- 102020 100 328
- DE-A1- 4 240 873
- JP-A- 2012 081 931
- US-A1- 2013 105 252
- US-A1- 2021 254 681
- US-A1- 2022 003 284
- US-A1- 2023 147 482

## Description

### TECHNICAL FIELD

The present disclosure relates to a filter system for one or more braking devices of a vehicle and method of operation thereof.

### BACKGROUND ART

The following discussion of the background art is intended to facilitate an understanding of the present disclosure only. It should be appreciated that the discussion is not an acknowledgement or admission that any of the material referred to was published, known or is part of the common general knowledge of the person skilled in the art in any jurisdiction as of the priority date of the disclosure.

Brake dust particles produced by wear on the brake pads of the disc brakes of motor vehicles may be collected or filtered using a filtration device. Such filtration device is typically useful in preventing the brake dust particles, which may be harmful to the environment or to health, from escaping into the environment or becoming lodged on/in the rims of wheels of the vehicles. One example of such filtration devices is shown in document US 2022/003284 A1.

Currently, a filter system for brake dust particles comprises a suction device provided together with a filter element in the vicinity of braking devices for vehicle wheels. The suction device may then be used to generate airflow comprising air enriched with the brake dust particles through the filter element.

However, a vehicle often operates under different road terrain and environmental conditions. For example, a vehicle operating in a highly polluted environment with the filter system indiscriminately switched on, i.e. with the suction device turned on continuously may not achieve much reduction in brake dust particles pollution but may instead adversely affect the lifespan of the filter system as the suction device causes the filter element to be loaded faster than usual.

Accordingly, there exists a need for an improved filter system for use with one or more braking devices of a vehicle, that seeks to address at least one of the aforementioned issues.

### SUMMARY

The invention was conceptualized to provide an improved filter system for use with one or more braking devices of a vehicle. The filter system comprises a processor configured to determine at least one operating/operation state of a filter element, which may form part of an active brake dust particle filter, based on obtaining at least one of an environmental data and a driving mode data as inputs. The determined operation state may then be used to control the operation of the filter element active brake dust particle filter. To this end, the improved filter system enables the vehicle to enable or disable the active brake dust particle filter (via a suction device) in response to environmental conditions such as weather or excessive polluted environment, in a real-time or near real-time basis. This allows the active brake dust particle filter to be enabled or disabled in response to environmental conditions or vehicle driving modes. It is contemplated in a vehicle there may be a filter system associated with a braking device, for example as a one to one correspondence, or a common filter system may filter the particles coming from two or more braking devices.

According to one aspect of the invention, there is provided a filter system for one or more braking devices of a vehicle, the filter system comprising: a suction device configured to generate an airflow in a vicinity of the one or more braking devices; a filter element for filtering brake dust particles generated by the one or more braking devices; an airflow channel positioned to allow the airflow generated by the suction device through the filter element; a controller for operating the suction device; and a processor arranged in data communication with the controller, the processor configured to obtain at least one of an environmental data and a driving mode data as input, and determine an operation state of the suction device as output. The processor may be configured to generate a control data indicative of the operation state of the suction device.

In some embodiments, the operation state of the suction device comprises an enable suction device state and a disable suction device state.

According to the invention, the environmental data comprises at least one of a weather data and an air pollution data.

In some embodiments, the environment data comprises the weather data. In a case where the weather data is indicative of adverse weather, the operation state is determined to be the disable suction device state.

In some embodiments, the environment data comprises the weather data. In a case where the weather data is indicative of normal weather, the operation state is determined to be the enable suction device state.

In some embodiments, the environment data comprises the air pollution data. In a case where the air pollution data exceeds a pre-determined threshold, the operation state is determined to be the disable suction device state.

In some embodiments, the driving mode data comprises at least one of an off-road driving mode, a race-driving mode, and a default driving mode.

In some embodiments, the driving mode data is the off-road driving mode or the race-driving mode, and the operation state is determined to be the disable suction device state.

In some embodiments, in a positive determination that the driving mode is the default driving mode, and the operation state is determined to be the enable suction device state.

In some embodiments, the default driving mode comprises an on-road non-racing driving mode.

In some embodiments, the on-road non-racing driving mode comprises at least one of an urban driving mode and an expressway driving mode.

In some embodiments, wherein based on the environmental data, the control data is indicative of the enable suction device state, and wherein based on the driving mode data, the control data is indicative of the disable suction device state, or wherein based on the environmental data, the control data is indicative of the disable suction device state and based on the driving mode data, the control data is indicative of the enable suction device state, the operation state of the suction device is determined to be the disable suction device state.

In some embodiments, the enable suction device state further comprises an idle state and a pre-conditioning state.

In some embodiments, at least one of the one or more braking devices comprise at least one frictional braking device. Optionally, each of the one or more braking devices comprises at least one frictional braking device.

In some embodiments, the airflow channel comprises a duct system, the duct system comprises at least one of a hose, a branched duct module, and/or a housing.

In some embodiments, wherein in a determination, the environmental data and a driving mode data result in different operation states, the operation state may be determined to be the disable suction device state.

In some embodiments, the suction device may comprise a motor, the motor comprises a driver circuit to obtain the control data from the controller and adjust the rotational frequency of the motor based on the control data to change the airflow. The driver circuit may be configured to do one or conditionally both of driving the motor and adjusting the rotational frequency.

In some embodiments, the control data is an analog signal or a digital signal.

According to another aspect of the invention, there is provided a vehicle comprising one or more braking devices and a filter system according to claim 1.

According to another aspect of the invention, there is provided a method of operating a filter system (e.g., the filter system as described herein) for one or more braking devices of a vehicle to filter brake dust particles generated by the one or more braking devices, the method comprising: receiving, by a processor, at least one of an environmental data and a driving mode data; determining, by the processor, an operation state of a suction device as output; and generating, by the processor, a control data indicative of the operation state of the suction device to a controller, the controller configured to operate the suction device.

According to another aspect of the invention, there is provided a computer program product, comprising software instructions installed thereon, such that when executed on the processor, executes the method of operating a filter system as described.

### BRIEF DESCRIPTION OF DRAWINGS

The disclosure will be better understood with reference to the detailed description when considered in conjunction with the non-limiting examples and the accompanying drawings, in which:
- FIG. 1A shows an exemplary schematic illustration of a filter system 100 for one or more braking devices of a vehicle; FIG. 1B shows an table depicting the various input data and possible operation states;
- FIGS. 2A, 2B, and 2C show various exemplary schematic illustrations of an active brake dust particle filter system configured to remove brake dust particles from a plurality of frictional braking devices;
- FIGS. 3A and 3B show schematic illustrations of some embodiments showing the suction device as an electric blower to generate airflow of the active brake dust particle filter based on the control data from a motor controller.
- FIGS. 4A and 4B show schematic illustrations of various configurations of processors and control units in a vehicle forming part of the filter system and interfacing with other components of the vehicle;
- FIGS. 5A and 5B show two possible configurations of a central communication interface or unit of a vehicle;
- FIG. 6A shows an exemplary schematic illustration of a vehicle installed with the filter system 100 and equipped with on-board sensors; FIG. 6B shows an exemplary schematic illustration of a vehicle installed with the filter system 100 and configured to obtain data from remote sensors and/or servers;
- FIG. 6C shows an exemplary schematic illustration of a vehicle installed with the filter system 100 and configured to obtain data from a server or other cars in a direct vehicle-to-vehicle data connection.
- FIG. 7A and FIG. 7B are flow charts for determining whether a vehicle is operating in an off-road driving mode or a race-driving mode;
- FIG. 7C shows various examples of default driving mode and different types of braking;
- FIG. 7D is a rotational frequency versus time graph for illustrating the different operation states of a suction device;
- FIG. 8 is a flow chart for determining whether a vehicle is operating in an adverse weather or excessively polluted environment; and
- FIG. 9 is a flow chart illustrating a method of operating a filter system.

### DETAILED DESCRIPTION

The following detailed description refers to the accompanying drawings that show, by way of illustration, specific details, and embodiments in which the disclosure may be practiced. These embodiments are described in sufficient detail to enable those skilled in the art to practice the disclosure. Other embodiments may be utilized, and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the", and the term "at least one" as used with regard to a feature or element include a reference to one or more of the features or elements. As used herein, the term "and/or" includes any and all combinations of one or more of the associated listed items.

As used herein, the term "associate", "associated", and "associating" indicate a defined relationship (or cross-reference) between at least two items.

Throughout the description, the term "vehicle", as used herein, refers to a motor-powered vehicle, for example having 2, 3, 4, or more wheels. Examples of the vehicle include a passenger car, a truck, a bus, a lorry, or a rail vehicle, for example, a locomotive, a wagon. In some embodiments, the vehicle may be an electric vehicle or a hybrid (internal combustion engine and electrical) vehicle. In some embodiments, the vehicle may be an internal combustion engine (ICE) vehicle (i.e., non-hybrid). Vehicle may further include autonomous vehicles.

Throughout the description, the term "braking device", as used herein, includes a frictional brake but excludes hydrodynamic brakes such as parachutes. In some embodiments, a frictional brake may comprise two solids entering into contact, for example, a braking pad (or shoe) may contact a brake disc, a drum, or a wheel. With the contact, kinetic energy is converted into heat energy, and brake dust particles, in the form of particulate matter is generated due to the friction.

Throughout the description, the term "filter element", as used herein, refers to an element for filtering brake dust particles generated by one or more braking devices. The filter element may include a particulate filter, for filtering particles suspended in air, for example, to filter out airborne particulate matter (PM) particles of various particle size distributions, such as PM10, PM5, PM2.5, PM1. In some embodiments, the filter element may be a fine dust filter. In some embodiments, the filter element may form part of a filter unit to separate the harmful particles (e.g. PM10) from the air which would pollute the environment. In some embodiments, the filter element may comprise or may be formed from or of nonwoven fibers. The term filter unit may comprise at least one filter element.

Throughout the description, the term "suction device" as used herein, may broadly refers to any airflow generation unit configured to generate an airflow near the brake system via an airflow channel through a filter unit or filter element to separate the harmful particles (e.g. PM10) from the air which would pollute the environment. In some embodiments, the suction device may comprise a blower operating as a centrifugal pump, velocity pump, or a fan, the blower configured to generate an airflow based on a negative pressure formed in an enclosed housing for filtering air enriched with the brake dust particles.

Throughout the description, the term "processor(s)", as used herein, includes one or more electrical circuits capable of processing data, i.e. processing circuits. A processor may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, or a firmware.

Throughout the description, the term "module" refers to, or forms part of, or include an Application Specific Integrated Circuit (ASIC); an electronic circuit; a combinational logic circuit; a field programmable gate array (FPGA); a processor (shared, dedicated, or group) that executes code; other suitable hardware components that provide the described functionality; or a combination of some or all of the above, such as in a system-on-chip. The term module may include memory (shared, dedicated, or group) that stores code executed by the processor.

Throughout the description, the term "data" may be understood to include information in any suitable analog or digital form, for example, provided as a file, a portion of a file, a set of files, a signal or stream, a portion of a signal or stream, a set of signals or streams, and the like. The term data, however, is not limited to the aforementioned examples and may take various forms and represent any information as understood in the art.

Throughout the description, the term "obtain", as used herein, refers to the processor which actively obtains the inputs, or passively receives inputs from one or more sensors or data source. The term obtain may also refer to a processor, which receives or obtains inputs from a communication interface, e.g. a user interface. The processor may also receive or obtain the inputs via a memory, a register, and/or an analog-to-digital port.

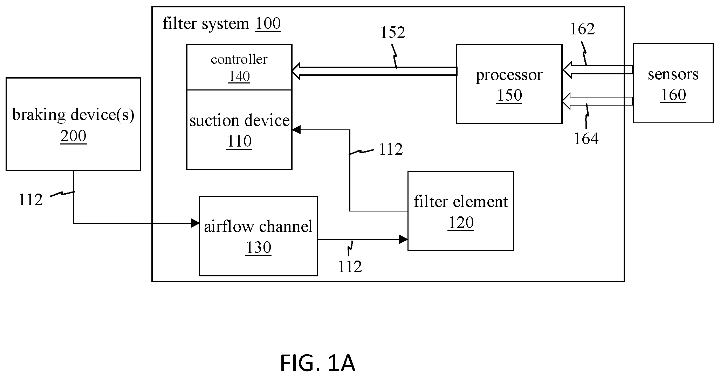

FIG. 1A shows a schematic block diagram of a filter system 100 for use with one or more braking devices 200 of a vehicle. The filter system 100 may comprise a suction device 110 configured to generate an airflow 112 in a vicinity of the one or more braking devices 200; a filter element 120 for filtering brake dust particles generated by the one or more braking devices 200; an airflow channel 130 positioned to allow the airflow 112 generated by the suction device 110 through the filter element 120, a controller 140 for operating the suction device 110; and a processor 150 arranged in data communication with the controller 140, the processor 150 configured to obtain at least one of an environmental data 162 and a driving mode data 164 as input and determine an operation state of the suction device 110 as output; wherein the processor 150 is configured to generate a control data 152. The control data 152 may be indicative of the operation state of the suction device. In some embodiments, the control data 152 may then be sent to the controller 140 and be converted to a drive signal 146, and/or to other circuitry to operate the suction device 110. In some embodiments, each braking device 200 of a vehicle may comprise an associated filter system 100. For example, in a vehicle having 4 braking devices 200 may have 4 associated filter system 100. Each associated filter system 100 may be independent from other filter systems 100, i.e. each associated filter system may have its independent logic and control.

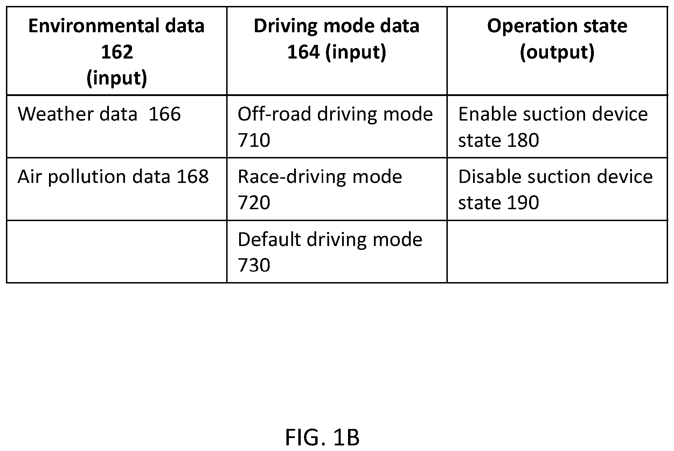

FIG. 1B is a table illustrating some examples of the environmental data 162 and the driving mode data 164 as inputs. The environmental data 162 may include weather data 166 and pollution data 168. The driving mode data 164 may include data relating to an off-road driving mode 710, race-driving mode 720, and default driving mode 730. The operation states of the suction device may include an enable suction device state 180 and a disable suction device state 190.

In some embodiments, the environmental data 162 and the driving mode data 164 may be obtained from one or more sensors 160. The one or more sensors 160 may be a hardware sensor, a software sensor, or a combination of hardware and software sensors.

In some embodiments, the controller 140 may be integrated with the processor 150 to form an integrated processing module.

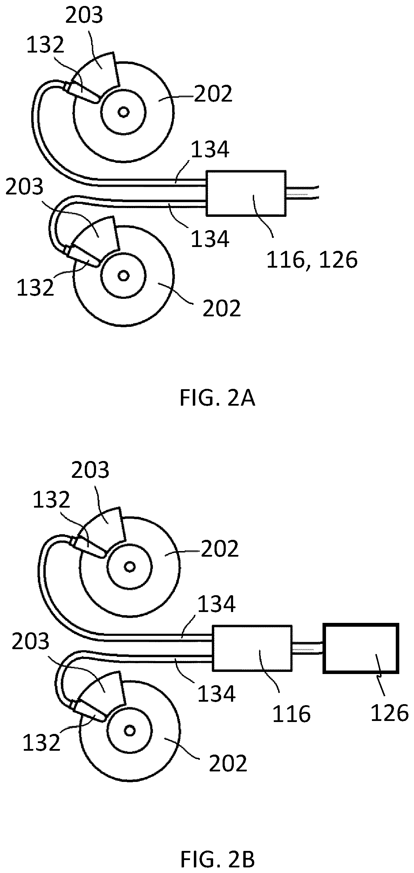

In the embodiment of FIG. 2A, a schematic illustration of a part of a vehicle, with particular emphasis on braking devices of the vehicle interacting with the filter system 100 implemented as an active brake dust particle filter, is shown.

Two braking devices in the form of frictional braking devices, are shown, each with a brake disc 202 and brake pads 203. The airflow channel 130 comprises a suction nozzle 132 positioned at each braking device near the brake disc 202 and brake pads 203. The suction nozzle 132 may be shaped and dimensioned to suck brake dust particles from the brake disc 102 and brake pads 103 when the suction device 110 is enabled during a braking event, i.e. when the brake pads 203 contact the brake disc 202. Each suction nozzle 132 is fluidly connected to the suction device 110 via suction hoses 134. The suction nozzle 132 may be connected to a housing 116, which preferably contains the suction device 110 for generating the airflow (suction flow) for extracting the brake dust particles from the brake pads 103 or the brake discs 102. In FIG. 2A, the housing 116 may further include a filter unit 126, which in turn houses one or more filter elements 120.

As an alternative arrangement shown in FIG. 2B, with respect to the airflow direction, a filter unit 126, which houses one or more filter elements 120, may be positioned downstream the housing 116 which houses suction device 110.

In some embodiments, the airflow channel comprises a duct system, the duct system comprises at least one of a hose, a branched duct module, and/or a housing.

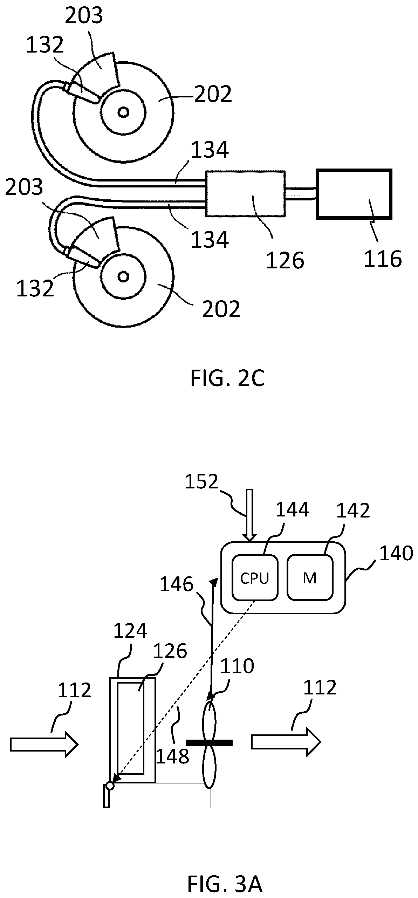

In yet another alternative arrangement shown in FIG. 2C, with respect to the airflow direction, the suction device 110 may be positioned downstream of the filter unit 126. Such an arrangement may advantageously minimize the suction device 110 from contacting the brake dust particles.

FIG. 3A shows a schematic illustration of an embodiment of the controller 140 comprising a central processing unit (CPU) 144 and a motor driver 142. The CPU 144 may be the processor 150 or a separate CPU or microcontroller (µC) configured to receive the control data from a remote processor 150. The control data may be a digital or analog signal sent to the motor driver 142 to operate the suction device 110. In some embodiments, the control data may be an enable suction device signal indicative of an enable suction device state of the suction device 110, or a disable suction device signal indicative of a disable suction device state of the suction device 110.

In some embodiments, the CPU 144 and motor driver 142 may be implemented as a single electronic circuit board or unit. In some embodiments, the CPU 144 may be implemented as a separate electronic circuit board or unit.

In some embodiments, the control data 152 indicative of the enable suction device state 180 and the disable suction device state 190 may be digital signals, such as binary signals. For example, the control data 152 may be a binary '1' data, and the disable suction device signal may be a binary '0' data. Alternatively, the control data 152 indicative of the enable suction device state 180 may be a binary '0' data, and control data 152 indicative of the disable suction device signal may be a binary '1' data. In some embodiments, the enable suction device state may further include other states as will be described subsequently.

In some embodiments, the control data may be analog signals. In an alternative embodiment, the signal may comprise a string of characters.

In some embodiments, the suction device may be operated by means of a motor and the controller 140 may be a motor controller. The control data indicative of the disable suction device operation state may be converted to a drive signal 146 by the controller to switch the suction device off. The control data indicative of the enable suction device operation state may be converted to a drive signal 146 by the controller to drive a motor of the suction device 110. The drive signal 146 may be used to control the operational intensity of the suction device.

In some embodiments, the suction device 110 may be a blower fan operated by the controller 140, the suction device 110 configured as a vacuum pump. The operational intensity may be proportional to a rotational frequency of the motor. In some embodiments, the fan may comprise at least three blades.

In some embodiments, the motor controller 140 may control the rotational frequency of the motor from a first pre-determined rotational frequency to a second pre-determined rotational frequency. In some embodiments, the blower fan frequency may be controlled from the first pre-determined rotational frequency of, for example, 5000 revolutions-per-minute (rpm) to the second pre-determined frequency of, for example, 50000 rpm. Controlling the blower fan may be such that, during suction, airflow is maximized while maintaining the blower temperature at an operating temperature or within a range of temperature. In some embodiments, the motor controller 140 may comprise one or more temperature sensors to monitor the temperature of the blower fan.

In some embodiments, the motor controller 140 may provide a drive signal 146 to a motor driver 142, which may in turn convert the drive signal 146 to drive the motor. In one embodiment, the drive signal 146 may be an electrical signal. The driver circuit may amplify the electrical signal to a suitable electrical value to drive the motor. The electrical signal may be, in non-limiting examples, current, voltage and/or power.

In some embodiments, the electrical power source driving the vehicle may be a battery. The battery may be a battery for operating other components of the vehicle, such as, but not limited to, an electronic control unit or engine control unit (ECU). In some embodiments, the driver circuit may be integrated with the ECU.

FIG. 3A may include one or more shutters 124 capable of being opened or closed to expose the filter unit 126 to the external environment or shield the filter unit 126 from the external environment. In some embodiments, as an alternative or in addition to sending a drive signal 146 upon detection of a control data indicative of the disable suction device operation state to switch the suction device off, a bypass signal 148 may be sent by the CPU 144 to the one or more shutters 124 to operate the one or more shutters 124 to close, thereby shielding the filter unit 126.

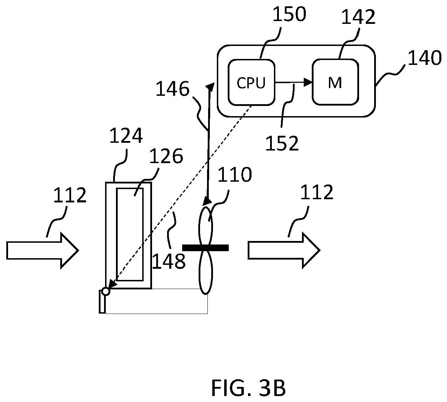

FIG. 3B shows another embodiment of the controller 140, wherein the processor 150 forms part of the controller 140 and the generated control data 152 is sent to the motor driver 142.

In the embodiment of FIG. 3A, it is appreciable that the processor 150 may be a remote processor. In some embodiments, the remote processor 150 may be a cloud server.

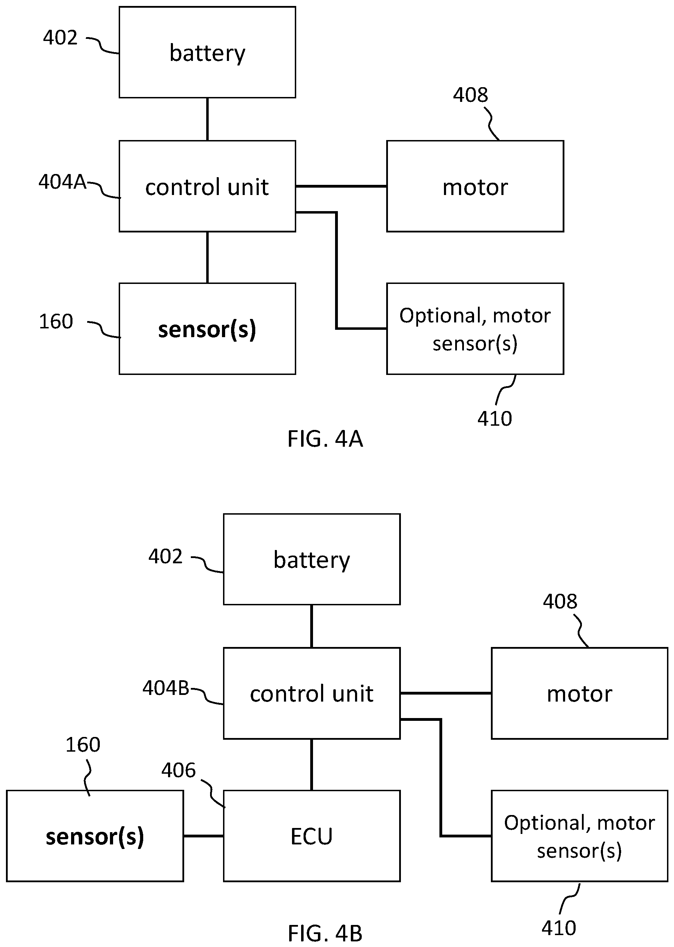

FIGS. 4A and 4B show two possible configurations of the controller 140 in a vehicle. Electrical power to the controller 140 may be supplied by an electrical power source, such as a battery 402, of the vehicle. The battery 402 may be a battery configured to provide power to the ECU of the vehicle, and/or to other parts of the vehicle, for example, where the vehicle is an electric vehicle or hybrid vehicle, the battery 402 may also be configured to provide electrical power to the drive train of the electric or hybrid vehicle.

In the embodiment shown in FIG. 4A, the controller 140 may be in the form of a control circuit 404A, the control circuit 404A may form part of the ECU. Alternatively, in the embodiment shown in FIG. 4B, a control circuit 404B may be a separate circuit that is operably connectable to an ECU 406. In the alternative arrangement shown in FIG. 4B, the control circuit 404B may be a separate circuit, the separate circuit operably connectable with the ECU 406.

Each of the depicted control circuit 404A, 404B may be connected to a vehicle motor driver 408 of the suction device 110. The vehicle motor driver 408 may be configured to drive a motor of the vehicle to power the operation of the vehicle. In some embodiments, the vehicle motor driver 408 may also power the operation of the suction device 110, i.e. including the function of the motor driver 142.

In some embodiments, the control circuits 404A, 404B may be operably connected to one or more motor sensors, each of the one or more motor sensors be configured to receive motor sensor data 410 from the motor. Such motor sensor data 410 may include at least one of a motor temperature data, revolutions-per-minute (RPM) data, and velocity data.

The control circuits 404A, 404B may be connected to the one or more sensors 160 to obtain environmental data 162, and/or driving mode data 164 from the environment around the vehicle or within the vehicle. The environmental data may include weather data, air quality data, air temperature data, and/or air relative humidity data. The driving mode data 164 may include various types of roads/environment the vehicle is driving on, such as off-road driving, race-driving, urban road driving, expressway driving, etc.

In some embodiments, computer memory may be distributed in one or more of the abovementioned devices. Operably connectable may include the meaning of connectable via a vehicle's data communication bus, for example, a controller area network (CAN) bus.

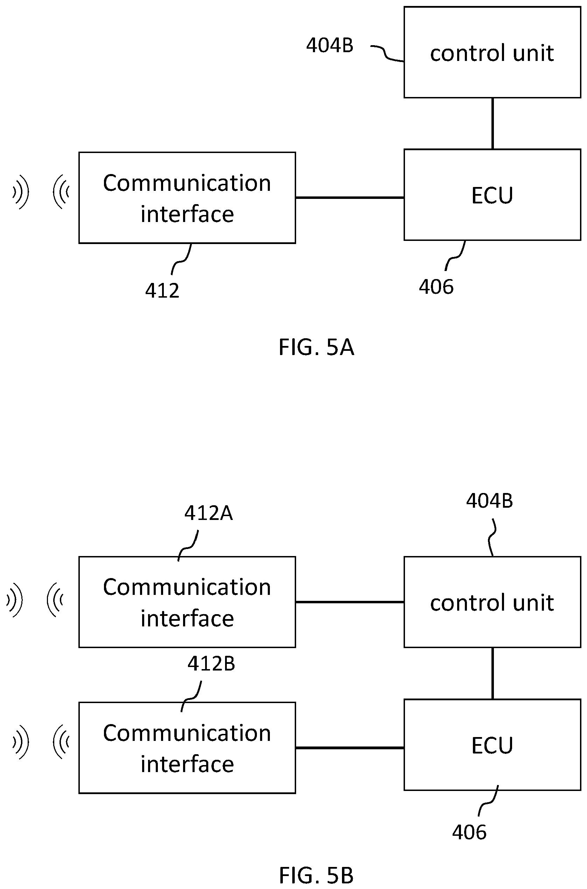

FIG. 5A and FIG. 5B show two configurations and arrangement of a communication interface. In some embodiments, the vehicle may have a central communication interface unit. In FIG. 5A, the ECU is connected to an associated (or integral) communication interface. In FIG. 5B, the control circuit 404B and the ECU 406 are each connected to a separate communication interface 412A and 412B respectively. The communication interface may include a pre-defined wireless communication protocol to receive the environmental and driving mode data 162, 164 in the form of sensor data. Non-limiting examples of the pre-defined wireless communication protocols include: global system for mobile communication (GSM), enhanced data GSM environment (EDGE), wideband code division multiple access (WCDMA), code division multiple access (CDMA), time division multiple access (TDMA), wireless fidelity (Wi-Fi), voice over Internet protocol (VoIP), worldwide interoperability for microwave access (Wi-MAX), Wi-Fi direct (WFD), an ultra-wideband (UWB), infrared data association (IrDA), Bluetooth, ZigBee, SigFox, LPWan, LoRaWan, GPRS, 3G, 4G, LTE, and 5G communication systems. In addition, or alternatively, the processor 150 may receive or obtain the data 162, 164 via wired means. In some embodiments, the communication interface of FIG. 5A and/or Fig. 5B may be configured to exchange information with one or more other vehicles, i.e. vehicle-to-vehicle communication, such as direct vehicle-to-vehicle data connection. The vehicle-to-vehicle communication may enable the vehicle to wirelessly exchange data about the speed, locations, and direction of travel with other vehicles.

In some embodiments, the one or more sensors 160 may include one or more location-based sensors, one or more pressure sensors, one or more temperature sensors, one or more moisture/water sensors, one or more distance sensors, one or more particulate matter sensors, and/or one or more image sensors, for example, cameras. In some embodiments, the one or more sensors may further include one or more modules to derive or calculate one or more parameters based on raw signals received by the one or more sensors. As an example of a distance sensor, a light detection and ranging (LiDAR) sensor may be used to emit laser light from a transmitter source and receive a reflected light from one or more objects the laser light is incident on. The reflected light is then detected by a receiver of the LiDAR sensor, and the reflected light signal, including a time of flight (TOF) parameter may then be used by the one or more modules within the LiDAR sensor to develop a distance map of the one or more objects.

The environmental data 162 and/or the driving mode data 164 may be indicative of the vehicle usage, that is, the environment the vehicle is operating in and/or the road or surface(s) the vehicle is operating in. In some embodiments, the sensor data may be used to determine the usage of the vehicle and to enable or disable the suction device 110.

In some embodiments, the environmental data comprises at least one of a weather data and an environmental pollution data. The environmental data may be obtained from the one or more sensors 160. The one or more sensors 160 may include hardware sensors, software sensors, or various combinations of hardware and software sensors.

In some embodiments, the one or more sensors 160 may be on-board the vehicle. In some embodiments, the one or more sensors 160 may include remote sensor(s). In some embodiments, the processor 150 may be configured to extract data from established sources, such as weather data, satellite data, map data, etc.

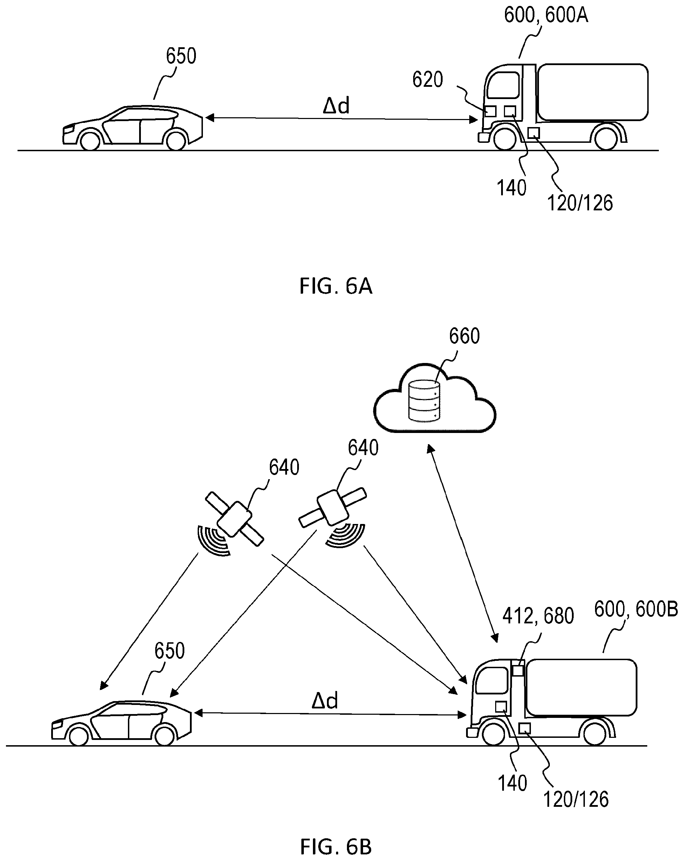

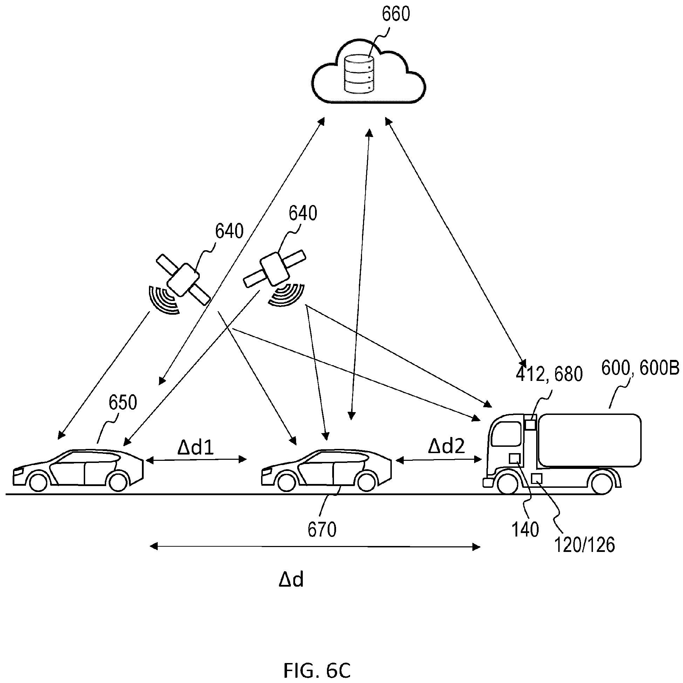

Embodiments of the obtained environmental data and/or driving mode data used to determine the operation state of the suction device, which in turn operate the active brake dust particle filter system 100, are described with reference to FIGS. 6A, 6B and 6C.

FIG. 6A shows a vehicle 600A comprising controller 140 configured to receive sensor data from the one or more sensors 160 in the form of on-board sensors 620. The on-board sensors 620 may be used to determine, *inter alia,* a distance Δd between the vehicle 600A and another vehicle 650, so as to determine an operation state of the suction device 110 of the active brake dust particle filter system 100.

FIG. 6B shows another vehicle 600B comprising the controller 140 configured to receive, remotely, location data from location sensor(s) of the one or more sensors 160. The one or more sensors 160 may be in the form of a navigation system such as a global positioning system (GPS) system, the GPS system comprising a plurality of satellites 640 (usually 4 or more) and a receiver 680 (within the vehicle 600B). The receiver 680 may be part of the communication interface 412. The communication interface 412 may be arranged to remotely receive location data from the satellite 640 and historical or map data from the cloud server 660. The location data obtained from the location sensor(s) so as to determine the location of the vehicle 600B. The location data of the other vehicle 650 may also be obtained and may be transmitted to the vehicle 600B (subject to privacy constraints).

FIG. 6C shows another embodiment of the vehicle 600B in a convoy arrangement, with another vehicle 670 positioned between vehicle 600B and vehicle 650. Similar to FIG. 6B, the controller 140 may be configured to receive, remotely, location data from location sensor(s) of the one or more sensors 160. The communication interface 412 may be configured to remotely receive location data from the satellite 640 and historical or map data from the cloud server 660. In addition, the communication interface 412 may be configured to receive vehicle data from vehicle 670 via direct vehicle-to-vehicle connection or communication. The location data obtained from the location sensor(s), in addition to the data received from vehicle 670, may be used to obtain/determine a distance Δd2 between the vehicle 600B and vehicle 670, a distance Δd1 between the vehicle 650 and vehicle 670. The obtained distance parameters Δd2 and Δd1 may be used to derive the distance Δd parameter, i.e. the distance between the vehicle 600B and vehicle 650.

It is contemplated that the embodiments of FIGS. 6A, 6B and 6C may be combined, that is, the vehicle 600A and 600B may be the same vehicle 600 comprising on-board sensors 620 and comprising communication interface 412 to receive sensor data from remote sources.

In some embodiments, the embodiments of FIGS. 6A, 6B, and 6C, particularly the one or more sensors 160, may include one or more particulate matter sensors, and one or more tire pressure sensors, may be used to determine if the vehicle 600 is operating in various driving modes, such as an off-road driving mode, a race-driving mode, and a default-driving mode.

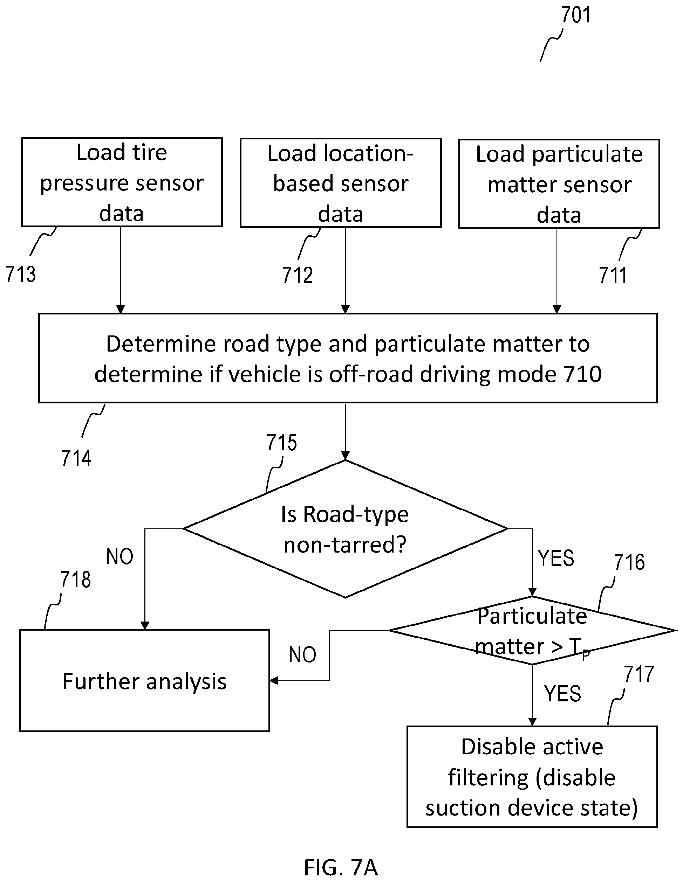

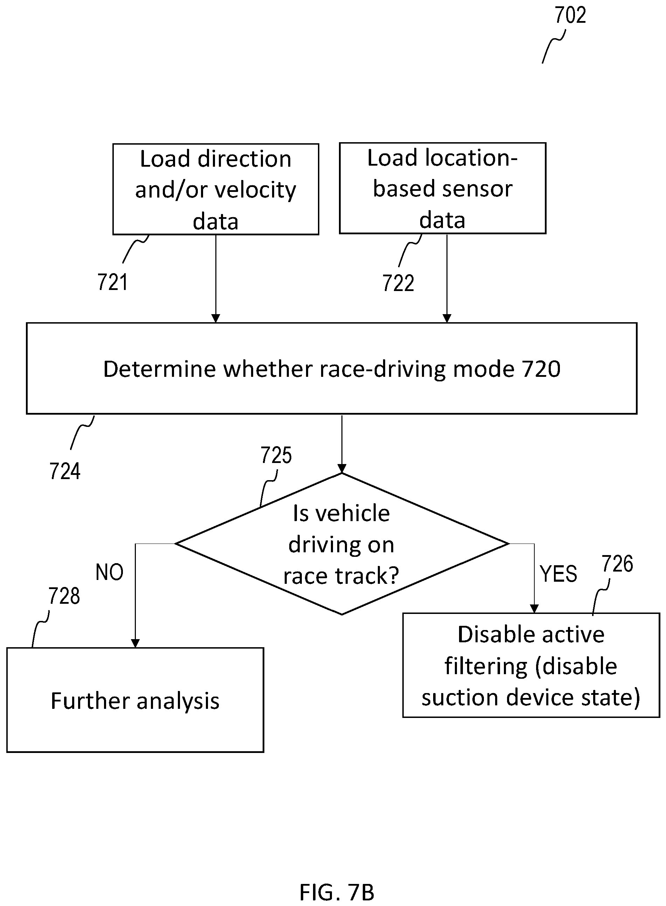

FIGS. 7A and 7B show examples of flow charts for determining various driving modes of the vehicle. comprising an off-road driving mode 710, a race-driving mode 720, and a default driving mode 730. In general, in the case where the driving mode is analyzed to be the off-road driving mode 710 or the race-driving mode 720, the operation state of the suction device is determined to be the disable suction device state.

FIG. 7A shows an exemplary flow diagram of a method 701 for determining an off-road driving mode 710 based on particulate matter sensor data 711, location-based sensor data 712, and at tire pressure sensor data 713.

The off-road driving mode 710 may be described as the vehicle 600 operating on a non-paved road or not on a road at all, for example, vehicle operating on dirt tracks. The off-road driving mode is to be contrasted with an event where the vehicle deviated or left a road.

The off-road driving mode 710 may be detected by using the location sensor(s) 160, for example, an in-built navigation system within the vehicle 600 or on a smartphone device of a user of the vehicle. The obtained location-based sensor data 712 may be in the form of GPS data. The term GPS as used herein and in accordance with various embodiments, may mean the US global positioning system, or any other equivalent systems, such as Galileo, Beidou, GLONASS, and may include suitable coordinates depending on the specific GPS system used. The GPS data may be accompanied with a map data of a region or area within a certain pre-defined radius of the vehicle location based on the GPS coordinates. In some embodiments, the location-based sensor of the vehicle may, by obtaining position coordinates (such as GPS), determine by geographical location that the vehicle is not on a paved road. In some embodiments, the determination of the location may be performed remote to the vehicle, for example, in a remote cloud server. The GPS data may then be processed by the location-based sensor module to obtain a driving vector or driving segment, with a pre-determined degree of certainty, matching the driving vector or driving segment to a remotely accessible map comprising information on paved roads and regions that are not paved roads. (e.g., via cloud database 660), and determining whether the driving vector or driving segment is a paved road, and if determined that not, then the vehicle is determined to be driving off-road.

In addition to the GPS data, particulate matter sensor data 711, and/or the tire pressure sensor data 713, may be used to determine the road type using a road type and environment analysis module 714. In some embodiments, one or more particulate matter sensors may be configured to detect the outdoor air quality can be used to measure the particle concentration of the environmental air, and if the particle concentration is above a pre-determined threshold T_{P}, then the suction device 110, and therefore the active brake dust filter, may be disabled.

The road type and environment analysis module 714 may form part of the processor 150. The environment or road analysis module 714 may be used to determine if the vehicle 600 is on a tarred road, and whether the dust load in the air surrounding the wheel is determined to be high, that is, higher than a pre-determined threshold concentration.

In summary, if it is determined that the road type is off-road based on decision logic 715 and the particulate matter is greater than a pre-determined concentration Tₚ based on decision logic 716, the operation state of the active brake dust particle filter, that is, the suction device 110 is set to a disable suction device 110 state.

In some embodiments associated with the disable suction device operation state, the speed of the suction device 110 may be reduced or the suction device 110 can be switched off to protect the filter system and its components. Additionally, an off-road system in the vehicle, such as a limited slip differential or downhill module can be used to adjust the control strategy of the active brake dust particle filter system via the suction device 110.

In some embodiments, if the road-type is determined to be tarred based on decision logic 715 or is the particulate matter in the air surrounding one or more wheels of the vehicle 600 is determined to be less than the pre-determined concentration T_{P}, further analysis 718 is required to determine the operation state of the active brake dust particle filter and the suction device 110.

FIG. 7B shows an exemplary flow diagram for determining a race-driving mode 720 based on particulate matter sensor data 711, location-based sensor data 722.

A race-driving mode 720 may be described as a vehicle 600 operating on a race track. Race tracks may be separated from populated or urban areas, and therefore pollution control may not be critical. In addition, electrical power may be saved for driving the vehicle 600 instead of using it for filtration. On race tracks, the active brake dust particle filter can be disabled via setting the operation state of the suction device 110 to disable suction device operation state if needed.

The race track may also be detected by location-based sensors. In some embodiments, the location-based sensor data 722, such as GPS data of the vehicle may be collected and used to determine if the vehicle 600 is operating in the race-driving mode.

In some embodiments, a process or method for determining whether the vehicle 600 is on a race track may include steps for obtaining position coordinates (such as GPS data) and direction and/or velocity data of the vehicle; processing the GPS data by a race-track driving mode determination module 724 to obtain a driving vector or driving segment, with a pre-determined degree of certainty; matching the driving vector or driving segment to a map comprising information of the race track position (e.g., from a geographical map server); and determining whether the driving vector or driving segment is on a race track (e.g., decision logic 725), and if determined that the driving vector or driving segment is on a race track (e.g., decision logic 726), then the driving mode of the vehicle is determined as a race-driving mode.

In some embodiments, in addition to using the location-based sensor data 722, a direction data and/or velocity data 721 of the vehicle 600 may be analyzed by the race-track driving mode determination module 724 for repeated cycles of the vehicle around the race-track, and if such repeated cycles are found, the vehicle 600 may be confirmed to be in the race-driving mode.

Upon determination that the vehicle is in the race-driving mode 720, the operation state of the active brake dust particle filter, that is, the suction device 110 is set to a disable suction device 110 state.

In some embodiments, in the case the vehicle 600 is determined not to be in the race-driving mode based on either the location-based sensor data 722 or the direction/ speed or velocity data 721, further analysis 728 may be required.

In some embodiments, the race-track driving mode determination module 724 may be part of the processor 150.

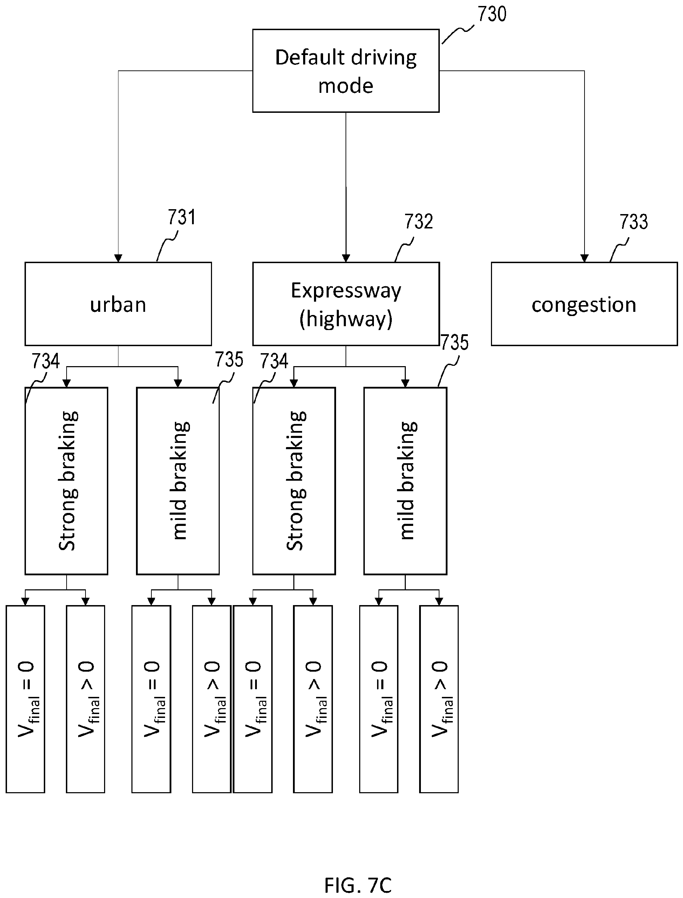

In some embodiments, the further analysis 718, 728 may include defining a default driving mode 730. As depicted in FIG. 7C, the default driving mode 730 may be a driving mode determined not within the off-road driving mode and the racing driving mode, and therefore the operation state of the suction device 110 is determined to be in the enable suction device state.

In some embodiments, the default driving mode 730 may be further classified into urban driving mode 731, expressway/highway driving mode 732, and/or congestion driving mode 733. Each of these driving modes may be determined based on obtaining GPS data and/or other sensor data and analyzing by the processor 150 whether the vehicle is on an expressway, highway, or an urban road. The expressway, highway, or urban roads are tarred roads. Urban roads may further include one-way roads, two-way roads, slip roads, etc.

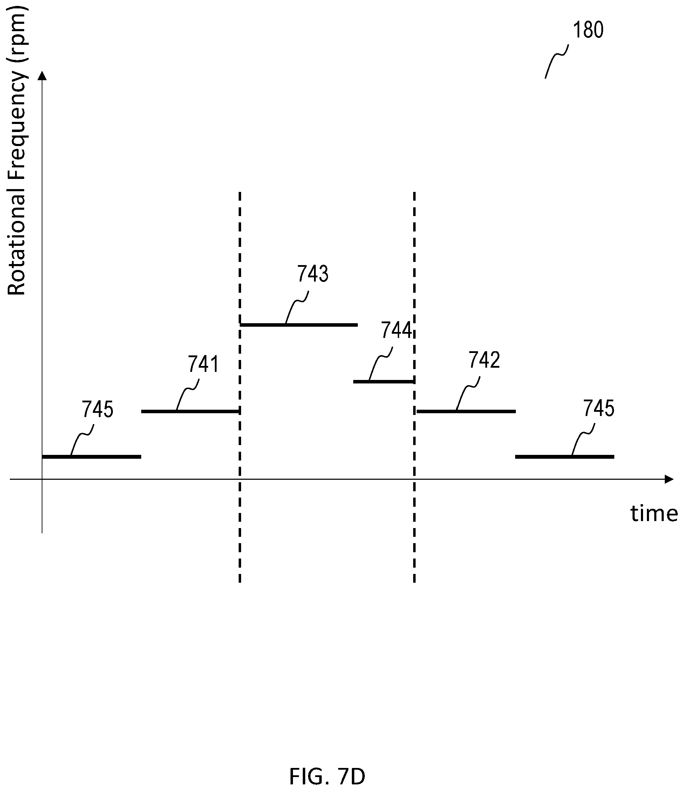

In some embodiments as shown in FIG. 7C and FIG. 7D, the enable suction device state may include a pre-conditioning state 741, an idle state 742, a full operation state 743, a post-conditioning state 744, and rest state 745. Each of the aforementioned operation states may operate for a specific duration.

The pre-conditioning state 741 may include a pre-conditioning of the suction device 110 to prepare the suction device 110 for filtering brake dust particles generated by the one or more braking devices 200 during braking events. In some embodiments, the pre-conditioning state may be associated with the motor of the suction device 110 being switched on in anticipation of a full operation suction power corresponding to different braking events. The braking events may be classified as either strong braking event 734, wherein the velocity of the vehicle may come to a complete stop after the one or more brakes are applied - final velocity V_{final} of the vehicle is zero, or mild braking event 735 wherein the vehicle 600 slows down after the one or more brakes are applied but does not come to a complete stop - final velocity V_{final} of the vehicle is greater than zero.

In some embodiments, the pre-conditioning state may correspond to an increasing blower frequency from a rest frequency (e.g., from zero, or 5000 rpm) to an intermediate frequency, the intermediate frequency chosen between one-fifth and half of a pre-determined maximum frequency. For example, the intermediate frequency may be chosen between 15000 rpm and 40000 rpm, or from 15000 rpm to 40000 rpm, where there is either a pre-determined probability of a future braking event to occur within a pre-determined time, and/or a braking event initialization has been detected via, for example, movement of a braking pedal. In certain conditions, for example, if the vehicle is on an expressway and a braking event happens relatively quickly, the pre-conditioning state may be switched to a full operation state quickly, due to a relatively high probability of a serious braking event.

In some embodiments, the pre-conditioning state may be determined based on a plurality of the likelihood of one or more changes indicating that a relatively high likelihood of braking event(s) may be happening. For example, a forecast traffic jam based on map information service, a sudden deceleration of vehicle velocity, etc. In some embodiments, the pre-conditioning state 711 may correspond to a positive signal indicating the vehicle will enter into a braking state/event within a pre-determined period.

The idle state 742 corresponds to a state where the suction device (e.g., blower) operates at an idle intensity, i.e. at rpm greater than zero, in anticipation to increase rpm to a full operation state in case of a brake event. The idle intensity (e.g., in rpm) may vary, for example, according to different driving modes and/or traffic conditions. In some embodiments, the idle state 742 may correspond with a resting or cooling state of the motor of the suction device 110 between successive braking events. In some embodiments, the idle state 742 may correspond to a state of cooling or a "default state" between successive braking events.

The full operation state 743 may be associated with a nominal full operation intensity of blower, i.e. a pre-determined rpm (or delivered power) that is used in blower control during an active filtration associated with a brake event. The nominal full operation intensity of blower may be set differently for different control strategies of the filtration system, for example, for mild braking event 735, the nominal full operation intensity may be lower than for strong braking event 734. The operation intensity of blower may vary for different filtration system operating modes, for example, for mild braking the nominal full operation intensity may be lower than for strong braking. In examples, strong braking may have a higher pre-determined torque and/or higher pre-determined torque gradient than the mild braking.

The post-conditioning state 744 corresponds to a blower frequency (e.g., in rpm) at a level higher than the idle state 742 or higher than zero (depending on the embodiment), for a pre-determined post-conditioning time, after a braking event associated with the full operation state 743 has ended. The post-conditioning state allows for faster response time if another braking event occurs within a pre-determined post-conditioning time. This may also allow for cooling of the blower due to a decreased blower frequency relative to the full operation state 743. In some embodiments, the post-conditioning state 744 is after the brake dust filtering time window, where air can be used to cool the blower, and off-brake emissions can be reduced. Off-brake emissions may correspond with emissions coming from the brake system when rotations of a rotating system/portion of the brake system (e.g., the frictional brake disc) is accelerated and the particles are sucked by an under-pressure of the rotating system/portion.

The rest state 715 may correspond to a state when the suction device 110 is started up and is comparatively lower in rpm compared to other states. In some embodiments, the rest state 715 may correspond to a zero rpm.

In some embodiments, some states may be merged. For example, the idle state and the post-conditioning state and/or the pre-conditioning state may be merged and may be implemented as a same state.

It is appreciable that although the FIG. 7D depicts abrupt changes in rpm between the different states, the actual changes in rpm between states may be in accordance with a slope based on a pre-determined change of rpm over time as the motor and blower need time to change frequency. It is contemplated that the full operation state 743 may extend until after a braking lever starts to being released by a driver of the vehicle 600, or it may end and merge into the post-processing when the brake starts to being released. In addition, although the FIG. 7D depicts the different states to be corresponding to the suction device constant rpm, this is for illustration purposes for ease of understanding. In real life, the rpm of the suction device may, in some embodiments, be adaptative.

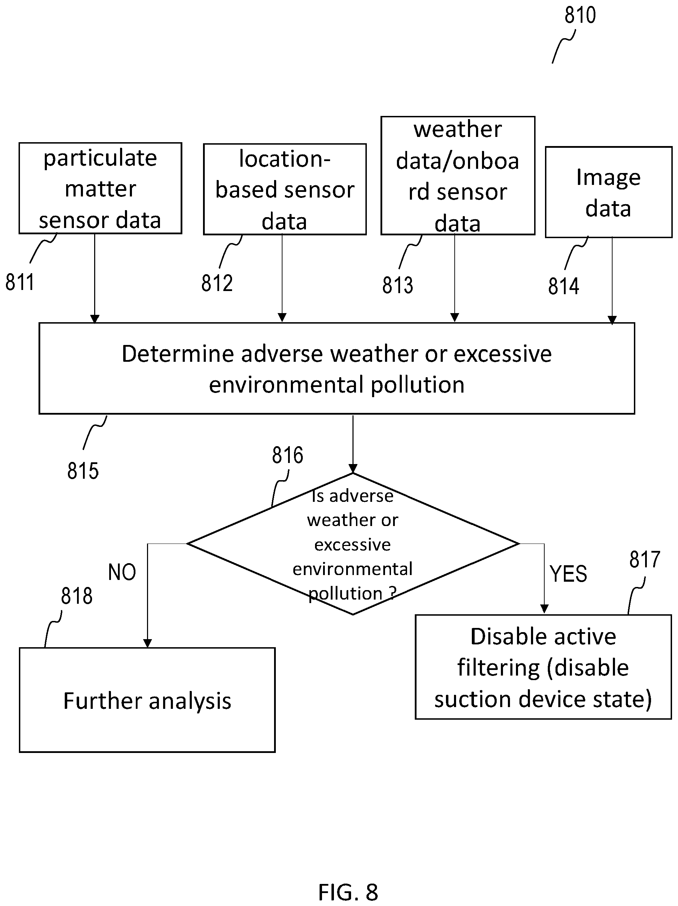

FIG. 8 shows a flow diagram for determining adverse weather or environmental pollution 810 based on particulate matter sensor data 811, location-based sensor data 812, weather data 813, and/or image data 814. The adverse weather/ environmental pollution may include one or more of heavy rain, snow, volcanic ash, and/or sandstorm.

The weather data 813 may be obtained from a weather information provider or other weather data source, and may include data obtained from on-board sensors of the vehicle 600. In some embodiments, the weather data source may be a remote cloud server. The weather data may be indicative of rain, heavy rain, snow, volcanic ash, sandstorm, air temperature, air relative humidity, etc. of a particular region or location of the vehicle 600 is determined to be, based on the location-based sensor data 812. Alternatively, or in addition (for example, to augment data), on-board vehicle sensors 620 may include temperature, humidity, pressure sensors etc. to detect weather conditions and obtain weather data. For example, on-board temperature sensors of the vehicle can be used to obtain air temperature outside the vehicle 600. Such data may be read via the vehicle data communication bus, for example, a controller area network (CAN) bus, of most vehicles. Air relative humidity data of the air outside the vehicle can also be obtained from the on-board sensors, for example, in a similar manner as outside air temperature. In another example, one or more image sensors, such as cameras or video cameras, may be used to obtain image data 814 via continuous streaming or at a pre-determined interval. The various sensor data could be analyzed by a classifier module to determine the type of adverse weather for the classification of images around the vehicle's surroundings, wherein the image classifier module may be an artificial intelligence (AI) also known as machine learning based classifier module and may be trained with a training data set of labelled images of one or more of rain, heavy rain, snow, volcanic ash, sandstorm, and other weather events. The meaning of images in this context may further include video clips/data,

If an adverse weather is determined 816 based on the module 815, the operation state of the suction device 110 is set to the disable suction device state 817. Otherwise, further analysis 818 may be carried out, or the operation state of the suction device 110 may be set to the enable suction device state.

In some embodiments, a rain event can be detected by water or moisture sensors arranged on an exterior area/ region of the vehicle. The classification of a rain event as adverse weather may be based on the intensity of rain, i.e. a heavy rain event may be indicative of adverse weather. In some embodiments, the heavy rain event may be based on further information obtained from remote weather data source, for example when the precipitation rate is more than a pre-determined rate, for example more than 7.6 millimeters per hour. The information relating to the pre-determined rate may be obtained from the weather data source as described above.

In the case where the rain event is detected to be a heavy rain event, the operation state of the suction device 110 may be determined to be the disable suction device state. This may be based on a preference or a requirement to protect the filter element 120 and/or other parts of the filter system from water, therefore the filter element 120 may be disabled when there is heavy rain. In addition, rain tends to reduce the particulate matter suspended in air, and therefore filtration during rain may not be required. The remaining useful life (RuL) of the filter element 120 and/or the electrical power mileage of the vehicle may be increased.

In some embodiments, instead of detecting a heavy rain event to determine the disable suction device state, a less heavy rain or mere detection of presence of a rain event may be used to determine the disable suction device state.

In some embodiments, particulate matter sensors may be positioned around the vehicle to detect particles in the air/environment surrounding the vehicle 600. In the case of a nearby volcanic eruption or sandstorm event, the concentration of coarse particles in the air that may be detected by the particulate matter sensors is relatively high. Enabling the suction device 110 may result in fast loading of the filter element 120 or filter unit 126. Operating the filter unit 126 in volcanic eruption or sandstorm event will unlikely make any considerable impact in the air due to excessively high pollution caused by the ash or the sand in the air surrounding the vehicle 600. The operation state of the suction device 110 will therefore be determined to be the disable suction device state.

In some embodiments, the detection of environmental pollution above a pre-determined threshold surrounding the vehicle 600 may cause the operation state of the suction device 110 to be in the disable suction device state. The detection of environment pollution above the pre-determined threshold may be deemed as excessive pollution.

In some embodiments, the particulate matter sensor data, 811, location-based sensor data 812, and weather data 813 may be used for the detection of environment pollution, such as air-pollution.

It is appreciable that in an environment of high external pollution, e.g., the concentration of particulate matter is above a pre-determined threshold, filtering braking dust via enabling the suction device 110 may not make a great impact, and may unnecessarily load the brake dust filter such that maintenance and replacement is needed earlier than when only filtering vehicle generated particles.

It is therefore appreciable that not operating the filter element 120 or filter unit 126 in highly polluted areas may extend (or avoid excessive reduction) of the remaining useful life of the filter.

In some embodiments, as an alternative or in addition to the real-time determination of particle concentration in the environment of the vehicle, the processor 150 may be configured to receive average and/or historical pollution data.

In some embodiments, historical data may be obtained from an external database (not shown), for example a pollution data information service which may also be integrated or form part of the weather database.

In some embodiments, the particulate matter concentration, such as selected from as one or more of: PM10, PM5, PM2.5, PM1 may be obtained from respective particulate matter sensor(s) arranged such as to measure exterior air (exterior to the vehicle), for example from a fresh air intake of any of the vehicle's air handling systems, such as from a cabin air filtration system.

In some embodiments, a pre-determined threshold of a high coarse dust concentration may be set, in an example, as PM10 concentration equal or above 1000 microgram per metre cube.

In some embodiments, a geographical area may be defined as highly polluted if a particulate matter concentration is above the aforementioned pre-determined threshold. For example, a geographical area may have a high coarse dust concentration. In examples, the high coarse dust concentration may be a current value, such as real-time, near real time, or may be an average, for example, a weighted average giving more weight to more recent pollution data and less weight to older pollution data. In some embodiments, near real-time may mean data having a delay from its acquisition of less than a pre-determined time of a few minutes, for example, less than 10 minutes, less than 5 minutes, less than 3 minutes, less than 2 minutes, or less than 1 minute. In some embodiments, real time may mean data having a delay from its acquisition of less than a pre-determined time of a few seconds, for example less than 20 seconds, less than 10 seconds, or less than 5 seconds.

In some embodiments, the geographical area may be a pre-determined area centered on the vehicle, for example a circle of a pre-determined radius. In another embodiment, the geographical area may be defined by the positions corresponding to a map (e.g., a geofence). In yet another embodiment, the geographical area may be defined as the grid area which overlaps with the vehicle's position. A map may be divided by a grid, and the pollution information may be continuously determined, stored in a database by grid, and a data of a specific grid may be requested by the vehicle and provided to the vehicle on demand.

In the some embodiments, the on-board sensors of the vehicle may include, for example, radar, optical (lidar, laser range, LED range, imaging sensors, such as cameras), sonar, acceleration sensor, and inclination sensor. One non-limiting example of the inclination sensor may be a multidimensional acceleration sensor that can measure acceleration in several directions from which the inclination may be determined. The data from any of such sensors may be obtained, in examples, via a vehicle's communication bus, e.g. a CAN bus connected to the sensors or from the ECU or other controller that is operably coupled to the sensor. Some of these sensors may be grouped.

In some embodiments, the one or more sensors 160 may include one or more inclination sensors configured to receive inclination data (e.g. pitch). The inclination data may be used to indicate that the vehicle 600 is driving on a down-slope. If the accelerator of the vehicle is detected not to be in use, then there is a likelihood that a braking event is happening or about to happen, for example, to maintain a relatively constant velocity. A further indicator may be that a vehicle gear may be engaged and the rounds-per-minute (RPM) of the engine is not increasing as would be expected for a measured inclination. The inclination data may be used as an input data to set the operation state of the suction device 110 to the enable suction device state based on the likelihood of the braking event happening.

In some embodiments, the image sensor of the vehicle, such as a camera, may also be used to detect braking lights ahead of the vehicle in order to determine a likelihood of braking, and hence set the operation state of the suction device to a pre-conditioning state. The camera may also be used to detect various warning lights ahead of the vehicle. The camera (or a separate camera where there are multiple cameras) may also be used to detect road signage, such as traffic lights, or warning signs in accordance with various standards/manuals, such as rev. 3 ed 2009 Manual on Uniform Traffic Control Devices for Streets and Highways (MUTCD), USA, or part 2 of the VzKat or signs listed in annex 1 of the German StVO of 6 March 2013 BGBI. I S. 367, and/or other regulatory definitions from other jurisdictions. The image sensors may be used to capture images which may then be sent to an AI-based classification module for training and/or classification.

In some embodiments, data from various sensors of the onboard systems may also be used to augment one or more of the aforementioned sensor data. Examples of such systems may include an auto-navigation system, a driving assistance system, an anti-locking braking system (ABS), an electric power steering (EPS) system, a lane assistant system, a blind spot assistant system, a trailer condition system (where available), a brake pedal level system, acceleration pedal position. Data from one or more of the aforementioned sensors of the vehicle onboard systems may include the raw data from the sensors, and/or may further include raw data pre-processed into at least one of ABS/EPS system data, lane assistance data, blind spot data, trailer condition data, brake/acceleration pedal measurement/data.

In some embodiments, the vehicle 600 may comprise an onboard communication circuit or a camera used to receive see-through and/or traffic ahead of one or more other vehicles in front of the vehicle 600. For example, another vehicle within a pre-determined distance ahead of the vehicle 600 may be detected by the onboard communication circuit and camera. The raw data obtained, which may be in the form of images and/or reflected laser signals may be analyzed by an estimator module to compute a probability of imminent braking, and said probability may be compared against a threshold or be entered in the calculation of the estimation of a braking event to occur. The probability of the braking event may then be used to determine the operation state of the suction device 110, such as an enable suction device operation state if the probability of the braking event exceeds a threshold, thus indicating a likely or highly likely of the braking event.

In some embodiments, at least part of the data processing may be implemented in the controller 140, in one or more cloud servers, in an ECU, or in a combination thereof.

In summary, the operation state of the suction device 110 may be determined based on the following relationship:
Disable suction device: heavy rain, e.g., based on the vehicle on-board sensors and/or remote weather service data;
Disable suction device: high polluted areas with coarse dust, e.g., based on the vehicle on-board sensors and/or remote weather service data;
Disable suction device: snowing, e.g., based on the vehicle on-board sensors and/or remote weather service data;
Disable suction device: volcanic ash e.g., based on the vehicle on-board sensor and/or remote weather service data;
Disable suction device: sandstorm, e.g., based on the vehicle on-board sensor and/or remote weather service data;
Disable suction device: racing-driving mode, e.g., based on geolocation detection of a race-track and velocity data of the vehicle;
Pre-conditioning: when a braking event is forecasted or estimated, for example, based on a traffic jam ahead warning determined based on location sensor and real-time map data, or distance between the vehicle and a front vehicle, or based on images captured by a vehicle onboard image sensor.
Pre-conditioning: when changes started, e.g., according to brake detection and / or accelerometer data

According to another aspect of the disclosure there is provided a vehicle 600 comprising one or more braking devices 200 and a filter system 100 positioned in a vicinity of the one or more braking devices 200, the filter system comprises a suction device 110 to generate an airflow 112 in the vicinity of the one or more braking devices, an airflow channel 130 positioned to allow airflow 112 generated by the suction device 110 through a filter element 120; the filter element 120 positioned to filter brake dust particles generated by the one or more braking devices 200 within the airflow 112, the filter system 100 comprising at least one processor 150; and a memory having instructions stored therein, the instructions, when executed by the at least one processor 150, cause the at least one processor 150 to: obtain at least one of an environmental data 162 and a driving mode data 164 as input; and determine an operation state of the suction device 110 as output; wherein the processor 150 is configured to generate a control data 152indicative of the operation state of the suction device 110. In some embodiments, the control data 152 may be sent to a controller 140.

The vehicle may be fully equipped or installed with all necessary sensors required to obtain the environmental data and the driving mode data. Alternatively, the vehicle may be equipped or installed with at least one sensor and obtain sensor data from one or more remote sensors. The remote sensor may include one or more map services, weather data services, and/or historical databases.

In some embodiments, the environmental data may include glare data, for example for detecting when visibility is deteriorated due to light (such as from the Sun) shining on a driver or on sensors (such as camera) used for automated driving. In examples, the sensor may be a light intensity sensor, a camera recording a driver's face illumination, a camera watching the road in drive direction, or other sensors. The glare data may be used to estimate or improve estimations, of a probability of braking.

In some embodiments, the vehicle may be an electric car, a hybrid car, or a motorcycle.

In some embodiments, the operation state of the suction device 110 may be an enable suction device state 180 or a disable suction device state 190 according to the aforementioned description relating to adverse weather, environmental pollution, racing driving mode, off-track driving mode, etc.

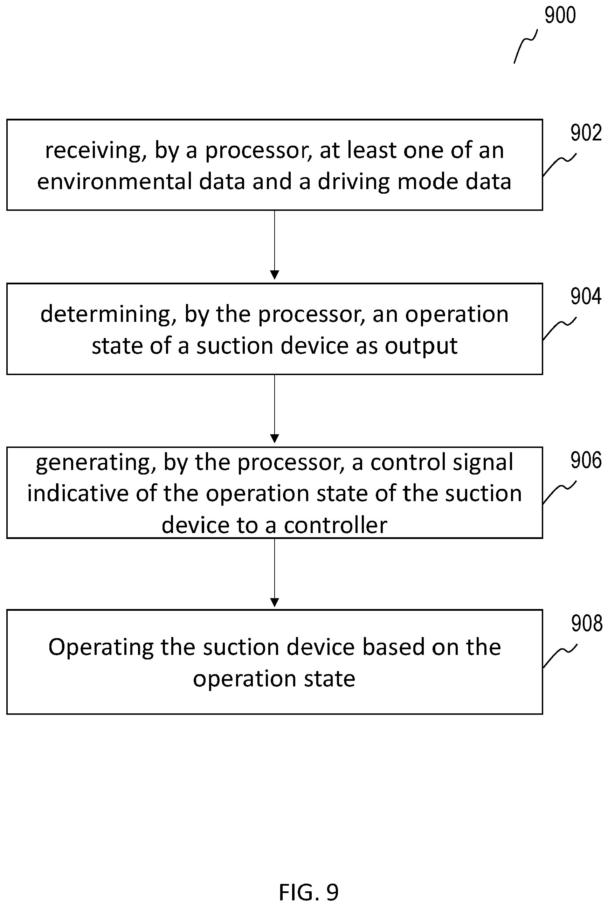

According to another aspect of the disclosure and with reference to the flow chart shown in FIG. 9, there is provided a method 900 of operating a filter system for one or more braking devices of a vehicle to filter brake dust particles generated by the one or more braking devices, the method 900 comprising: receiving 902, by a processor, at least one of an environmental data and a driving mode data; determining 904, by the processor, an operation state of a suction device as output; and generating 906, by the processor, a control data indicative of the operation state of the suction device to a controller, the controller configured to operate the suction device. The method may be coded as a computer program/product for execution in the processor 150 and/or controller 140.

In some embodiments, the operation state of the suction device 110 may be an enable suction device state (180) or a disable suction device state (190) according to the aforementioned description relating to adverse weather, environmental pollution, racing driving mode, off-track driving mode, etc.

Although Fig. 9 shows example blocks of method 900, in some embodiments, two or more of the blocks of method 900 may be combined or performed in parallel.

In one general aspect, computer program product may include a computer program product. Other embodiments of this aspect include corresponding computer systems, apparatus, and computer programs recorded on one or more computer storage devices, each configured to perform the actions of the methods.

According to another aspect of the disclosure, there is provided a computer program product, comprising software instructions installed thereon, such that when executed on the processor, executes the method of operating a filter system for one or more braking devices of a vehicle.

In some embodiments, the enable suction device state may include various operation states such as an idle state, a post-conditioning state, a full suction state.

In some embodiments, the enable suction device operation state may be associated with a probability of a braking event.

In addition to the aforementioned sensors, other possible sensor data that may be applicable to the present disclosure include acceleration sensors to determine longitudinal acceleration around a center position, emergency brake assistant data to determine a full operation intensity or load of the suction device, a flash data, a blind spot assistant data or lane departure warning active data, fan standby data, trailer detection data, blower set-up data, brake in more load data.

In some embodiments, the communication interface 412, 412A, 412B may be configured to obtain data from data sources such as Google data, Traffic Message Channel (TMC), live traffic (Car2Car) communication.

In some embodiments, wherein the vehicle is a train or a part thereof, e.g., a carriage (also named wagon), the communication interface may be configured to obtain data from and/or via a train signaling system, for example, European Train Control System ETCS, based on ETCS (like Chinese Train Control System (CTCS)) or similar. Such data may include information on track availability which may be used to estimate probability of braking.

Some embodiments of the disclosure further provide a computer program product, comprising software instruction installed thereon, such that when executed by the processor, executes steps 902 to 908 of method 900 described with reference to FIG. 9.

The present disclosure provides an improved system for filtering brake dust particles generated by one or more braking devices of a vehicle, the filter system comprising: a suction device configured to generate an airflow in a vicinity of the one or more braking devices; a filter element for filtering the brake dust particles generated by the one or more braking devices; an airflow channel positioned to allow the airflow generated by the suction device through the filter element; a controller for operating the suction device; and a processor arranged in data communication with the controller, the processor configured to obtain at least one of an environmental data and a driving mode data as input, and determine an operation state of the suction device as output; wherein the processor is configured to generate a control data, the control data indicative of the operation state of the suction device. Particularly, the operation state of the suction device may be disabled such that the filter element is protected under adverse weather conditions, environmental pollution, off-road driving mode or racing-track driving modes.

The methods described herein may be performed and the various processing or computation units and the devices and computing entities described herein may be implemented by one or more circuits. In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor. A "circuit" may also be software being implemented or executed by a processor, e.g. any kind of computer program, e.g. a computer program using a virtual machine code. Any other kind of implementation of the respective functions which are described herein may also be understood as a "circuit" in accordance with an alternative embodiment. A device (e.g. database system or vehicle, or vehicle component (e.g. vehicle controller) which performs one of the methods may for example include a communication interface (to receive and send the various data and information) a processing unit and a memory.

While the disclosure has been particularly shown and described with reference to specific embodiments, it should be understood by those skilled in the art that various changes in form and detail may be made therein without departing from the scope of the invention as defined by the appended claims. The scope of the invention is thus indicated by the appended claims.

## Claims

1. A filter system (100) for one or more braking devices (200) of a vehicle, the filter system (100) comprising:
a suction device (110) configured to generate an airflow (112) in a vicinity of the one or more braking devices (200);
a filter element (120) for filtering brake dust particles generated by the one or more braking devices (200);
an airflow channel (130) positioned to allow the airflow (112) generated by the suction device (110) through the filter element (120);
a controller (140) for operating the suction device (110); and
a processor (150) arranged in data communication with the controller (140), the processor (150) configured to obtain at least one of an environmental data (162) and a driving mode data (164) as input, and determine an operation state of the suction device (110) as output;
wherein the processor is configured to generate a control data (152), the control data (152) indicative of the operation state of the suction device (110) wherein the operation state of the suction device (110) comprises an enable suction device state (180) and a disable suction device state (190)
**characterised in that** the environmental data (162) comprises at least one of a weather data (166) and an air pollution data (168).

2. The filter system (100) of claim 1, wherein the environmental data (162) comprises the weather data (166), and wherein in data positive determination that the weather data is indicative of adverse weather, the operation state is determined to be the disable suction device state (190).

3. The filter system (100) of claim 1, wherein the environmental data (162) comprises the weather data (166), and wherein in a positive determination the weather data (166) is indicative of normal weather, the operation state is determined to be the enable suction device state (180).

4. The filter system (100) of claim 1, wherein the environmental data (162) comprises the air pollution data (168), and wherein in a positive determination that the air pollution data (168) exceeds a pre-determined threshold, the operation state is determined to be the disable suction device state.

5. The filter system (100) of claim 1, wherein the driving mode data (164) comprises at least one of an off-road driving mode (710), a race-driving mode (720), and a default driving mode (730).

6. The filter system (100) of claim 5, wherein in a positive determination, based on the driving mode data (164), that the driving mode is the off-road driving mode (710) or the race-driving mode (720), the operation state is determined to be the disable suction device state.

7. The filter system (100) of claim 5, wherein in a positive determination, based on the driving mode data (164), that the driving mode is the default driving mode (730), the operation state is determined to be the enable suction device state (180).

8. The filter system (100) of any one of claims 5 to 7, wherein the default driving mode (730) comprises at least one of an urban driving mode (731), an expressway driving mode (732), and a congestion driving mode (733).

9. The filter system (100) of claim 1, wherein based on the environmental data (162), the control data (152) is indicative of the enable suction device state (180) and based on the driving mode data (164), the control date (152) is indicative of the disable suction device state (190), or wherein based on the environmental data (162), the control data (152) is indicative of the disable suction device state (190) and based on the driving mode data (164), the control data (152) is indicative of the enable suction device state (180), the operation state of the suction device is determined to be the disable suction device state (190).

10. The filter system (100) of any one of the preceding claims, wherein the enable suction device state further comprises an idle state (742) and a pre-conditioning state (741), the pre-conditioning state (741) having a higher suction power of the suction device relative to the idle state (742).

11. The filter system (100) of any one of the preceding claims, wherein each of the one or more braking devices (200) comprises at least one frictional braking device.

12. The filter system (100) of claim 1, wherein in a determination, the environmental data (162) and a driving mode data (164) result in different operation states, the operation state is determined to be the disable suction device state (190).

13. A vehicle (600, 600A, 600B) comprising a filter system (100) according to any one of the preceding claims.

14. A method (900) of operating a filter system (100) for one or more braking devices (200) of a vehicle to filter brake dust particles generated by the one or more braking devices (200), the method (900) comprising:
receiving (902), by a processor (150), at least one of an environmental data (162) and a driving mode data (164);
determining (904), by the processor (150), an operation state of a suction device (110) as output wherein the operation state of the suction device (110) comprises an enable suction device state (180) and a disable suction device state (190); and
generating (906), by the processor (150), a control data indicative of the operation state of the suction device (110) to a controller, the controller configured to operate the suction device (110) wherein the environmental data (162) comprises at least one of a weather data (166) and an air pollution data (168).

15. A computer program product, comprising software instructions installed thereon, such that when executed on the processor (150), executes the steps of claim 14.

## Patentansprüche

1. Filtersystem (100) für eine oder mehrere Bremsvorrichtungen (200) eines Fahrzeugs, wobei das Filtersystem (100) Folgendes umfasst:
eine Saugvorrichtung (110), die so konfiguriert ist, dass sie einen Luftstrom (112) in der Nähe der einen oder mehreren Bremsvorrichtungen (200) erzeugt;
ein Filterelement (120) zum Filtern von Bremsstaubpartikeln, die von der einen oder den mehreren Bremsvorrichtungen (200) erzeugt werden;
einen Luftstromkanal (130), der so positioniert ist, dass er den von der Saugvorrichtung (110) erzeugten Luftstrom (112) durch das Filterelement (120) leitet;
eine Steuereinheit (140) zum Betreiben der Saugvorrichtung (110); und
einen Prozessor (150), der in Datenkommunikation mit der Steuereinheit (140) angeordnet ist, wobei der Prozessor (150) so konfiguriert ist, dass er mindestens eines von Umgebungsdaten (162) und Fahrmodusdaten (164) als Eingabe erhält und einen Betriebszustand der Saugvorrichtung (110) als Ausgabe bestimmt;
wobei der Prozessor so konfiguriert ist, dass er Steuerdaten (152) erzeugt, wobei die Steuerdaten (152) den Betriebszustand der Saugvorrichtung (110) angeben, wobei der Betriebszustand der Saugvorrichtung (110) einen aktivierten Saugvorrichtungszustand (180) und einen deaktivierten Saugvorrichtungszustand (190) umfasst, **dadurch gekennzeichnet, dass**
die Umgebungsdaten (162) mindestens eines von Wetterdaten (166) und Luftverunreinigungsdaten (168) umfassen.

2. Filtersystem (100) nach Anspruch 1, wobei die Umgebungsdaten (162) die Wetterdaten (166) umfassen und wobei bei einer positiven Feststellung, dass die Wetterdaten auf ungünstige Wetterbedingungen hinweisen, der Betriebszustand als deaktivierter Saugvorrichtungszustand (190) bestimmt wird.

3. Filtersystem (100) nach Anspruch 1, wobei die Umgebungsdaten (162) die Wetterdaten (166) umfassen, und wobei bei einer positiven Feststellung, dass die Wetterdaten (166) auf normales Wetter hinweisen, der Betriebszustand als der aktivierte Saugvorrichtungszustand (180) bestimmt wird.

4. Filtersystem (100) nach Anspruch 1, wobei die Umgebungsdaten (162) die Luftverunreinigungsdaten (168) umfassen, und wobei bei einer positiven Feststellung, dass die Luftverunreinigungsdaten (168) einen vorbestimmten Schwellenwert überschreiten, der Betriebszustand als deaktivierter Saugvorrichtungszustand bestimmt wird.

5. Filtersystem (100) nach Anspruch 1, wobei die Fahrmodusdaten (164) mindestens einen der folgenden Modi umfassen: einen Geländefahrmodus (710), einen Rennmodus (720) und einen Standardfahrmodus (730).

6. Filtersystem (100) nach Anspruch 5, wobei bei einer positiven Feststellung basierend auf den Fahrmodusdaten (164), dass der Fahrmodus der Geländefahrmodus (710) oder der Rennmodus (720) ist, der Betriebszustand als deaktivierter Saugvorrichtungszustand bestimmt wird.

7. Filtersystem (100) nach Anspruch 5, wobei bei einer positiven Feststellung basierend auf den Fahrmodusdaten (164), dass der Fahrmodus der Standardfahrmodus (730) ist, der Betriebszustand als der aktivierte Saugvorrichtungszustand (180) bestimmt wird.

8. Filtersystem (100) nach einem der Ansprüche 5 bis 7, wobei der Standardfahrmodus (730) mindestens einen der folgenden Modi umfasst: einen Stadtfahrmodus (731), einen Autobahnfahrmodus (732) und einen Verkehrsüberlastungsfahrmodus (733).

9. Filtersystem (100) nach Anspruch 1, wobei basierend auf den Umgebungsdaten (162) die Steuerdaten (152) den aktivierten Saugvorrichtungszustand (180) anzeigen und auf der Grundlage der Fahrmodusdaten (164) die Steuerdaten (152) den deaktivierten Saugvorrichtungszustand (190) anzeigen, oder wobei basierend auf den Umgebungsdaten (162) die Steuerdaten (152) den deaktivierten Saugvorrichtungszustand (190) anzeigen und basierend auf den Fahrmodusdaten (164) die Steuerdaten (152) den aktivierten Saugvorrichtungszustand (180) anzeigen, wird der Betriebszustand der Saugvorrichtung als deaktivierter Saugvorrichtungszustand (190) bestimmt.

10. Filtersystem (100) nach einem der obigen Ansprüche, wobei der aktivierte Saugvorrichtungszustand ferner einen Leerlaufmodus (742) und einen Vorkonditionierungszustand (741) umfasst, wobei der Vorkonditionierungszustand (741) eine höhere Saugleistung der Saugvorrichtung im Vergleich zum Leerlaufmodus (742) aufweist.

11. Filtersystem (100) nach einem der obigen Ansprüche, wobei jede der einen oder mehreren Bremsvorrichtungen (200) mindestens eine Reibungsbremsvorrichtung umfasst.

12. Filtersystem (100) nach Anspruch 1, wobei bei einer Bestimmung die Umgebungsdaten (162) und die Fahrmodusdaten (164) zu unterschiedlichen Betriebszuständen führen, der Betriebszustand wird als deaktivierter Saugvorrichtungszustand (190) bestimmt.

13. Fahrzeug (600, 600A, 600B) umfassend ein Filtersystem (100) gemäß einem der obigen Ansprüche.

14. Verfahren (900) zum Betreiben eines Filtersystems (100) für eine oder mehrere Bremsvorrichtungen (200) eines Fahrzeugs, um von der einen oder den mehreren Bremsvorrichtungen (200) erzeugte Bremsstaubpartikel zu filtern, wobei das Verfahren (900) Folgendes umfasst:
Empfangen (902) mindestens eines von Umgebungsdaten (162) und Fahrmodusdaten (164) durch einen Prozessor (150);
Ermitteln (904) eines Betriebszustands einer Saugvorrichtung (110) als Ausgabe durch den Prozessor (150), wobei der Betriebszustand der Saugvorrichtung (110) einen aktivierten Saugvorrichtungszustand (180) und einen deaktivierten Saugvorrichtungszustand (190) umfasst; und
Erzeugen (906) von Steuerdaten durch den Prozessor (150), die den Betriebszustand der Saugvorrichtung (110) an eine Steuereinheit anzeigen, wobei die Steuereinheit so konfiguriert ist, dass sie die Saugvorrichtung (110) betreibt, wobei die Umgebungsdaten (162) mindestens eines von Wetterdaten (166) und Luftverunreinigungsdaten (168) umfassen.

15. Computerprogrammprodukt, das darauf installierte Softwareanweisungen umfasst, sodass es bei Ausführung auf dem Prozessor (150) die Schritte von Anspruch 14 ausführt.

## Revendications

1. Système de filtre (100) pour un ou plusieurs dispositifs de freinage (200) d'un véhicule, le système de filtre (100) comprenant:
un dispositif d'aspiration (110) configuré pour générer un flux d'air (112) à proximité d'un ou de plusieurs dispositifs de freinage (200);
un élément de filtre (120) destiné à filtrer les particules de poussière de frein générées par le ou les dispositifs de freinage (200);
un canal de flux d'air (130) positionné de manière à permettre au flux d'air (112) généré par le dispositif d'aspiration (110) de passer à travers l'élément de filtre (120);
un contrôleur (140) pour faire fonctionner le dispositif d'aspiration (110); et
un processeur (150) agencé en communication de données avec le contrôleur (140), le processeur (150) étant configuré pour obtenir au moins l'une parmi des données environnementales (162) et des données de mode de conduite (164) en tant qu'entrée, et déterminer un état opérationnel du dispositif d'aspiration (110) en tant que sortie;
dans lequel le processeur est configuré pour générer des données de contrôle (152), les données de contrôle (152) indiquant l'état opérationnel du dispositif d'aspiration (110), dans lequel l'état opérationnel du dispositif d'aspiration (110) comprend un état de dispositif d'aspiration activé (180) et un état de dispositif d'aspiration désactivé (190), **caractérisé en ce que**
les données environnementales (162) comprennent au moins l'une parmi des données météorologiques (166) et des données de pollution atmosphérique (168).

2. Système de filtre (100) selon la revendication 1, dans lequel les données environnementales (162) comprennent les données météorologiques (166), et dans lequel, en cas de détermination positive que les données météorologiques indiquent des conditions météorologiques défavorables, l'état opérationnel est déterminé comme étant l'état de dispositif d'aspiration désactivé (190).

3. Système de filtre (100) selon la revendication 1, dans lequel les données environnementales (162) comprennent les données météorologiques (166), et dans lequel, en cas d'une détermination positive que les données météorologiques (166) indiquent des conditions météorologiques normales, l'état opérationnel est déterminé comme étant l'état de dispositif d'aspiration activé (180).

4. Système de filtre (100) selon la revendication 1, dans lequel les données environnementales (162) comprennent les données de pollution atmosphérique (168), et dans lequel, en cas d'une détermination positive que les données de pollution atmosphérique (168) dépassent un seuil prédéterminé, l'état opérationnel est déterminé comme étant l'état de désactivation du dispositif d'aspiration.

5. Système de filtre (100) selon la revendication 1, dans lequel les données de mode de conduite (164) comprennent au moins l'un parmi un mode de conduite tout-terrain (710), un mode de conduite de course (720) et un mode de conduite par défaut (730).

6. Système de filtre (100) selon la revendication 5, dans lequel, en cas d'une détermination positive, sur la base des données de mode de conduite (164), que le mode de conduite est le mode de conduite tout-terrain (710) ou le mode de conduite de course (720), l'état de fonctionnement est déterminé comme étant l'état de dispositif d'aspiration désactivé.

7. Système de filtre (100) selon la revendication 5, dans lequel, en cas d'une détermination positive, sur la base des données de mode de conduite (164), que le mode de conduite est le mode de conduite par défaut (730), l'état de fonctionnement est déterminé comme étant l'état de dispositif d'aspiration activé (180).

8. Système de filtre (100) selon l'une quelconque des revendications 5 à 7, dans lequel le mode de conduite par défaut (730) comprend au moins l'un parmi un mode de conduite urbaine (731), un mode de conduite sur autoroute (732) et un mode de conduite en embouteillage (733).

9. Système de filtre (100) selon la revendication 1, dans lequel, sur la base des données environnementales (162), les données de contrôle (152) indiquent l'état d'activation du dispositif d'aspiration (180) et, sur la base des données de mode de conduite (164), les données de contrôle (152) indiquent l'état de désactivation du dispositif d'aspiration (190), ou dans lequel, sur la base des données environnementales (162), les données de contrôle (152) indiquent l'état désactivé du dispositif d'aspiration (190) et, sur la base des données de mode de conduite (164), les données de contrôle (152) indiquent l'état activé du dispositif d'aspiration (180), l'état de fonctionnement du dispositif d'aspiration est déterminé comme étant l'état désactivé du dispositif d'aspiration (190).

10. Système de filtre (100) de l'une quelconque des revendications précédentes, dans lequel l'état d'activation du dispositif d'aspiration comprend en outre un état inactif (742) et un état de pré-conditionnement (741), l'état de pré-conditionnement (741) ayant une puissance d'aspiration du dispositif d'aspiration supérieure à celle de l'état inactif (742).

11. Système de filtre (100) de l'une quelconque des revendications précédentes, dans lequel chacun d'un ou de plusieurs dispositifs de freinage (200) comprend au moins un dispositif de freinage à friction.

12. Système de filtre (100) selon la revendication 1, dans lequel, lors d'une détermination, les données environnementales (162) et les données de mode de conduite (164) aboutissent à des états opérationnels différents, l'état opérationnel est déterminé comme étant l'état de désactivation du dispositif d'aspiration (190).

13. Véhicule (600, 600A, 600B) comprenant un système de filtre (100) selon l'une quelconque des revendications précédentes.

14. Procédé (900) de fonctionnement d'un système de filtre (100) pour un ou plusieurs dispositifs de freinage (200) d'un véhicule afin de filtrer les particules de poussière de frein générées par le ou les dispositifs de freinage (200), le procédé (900) comprenant:
la réception (902), par un processeur (150), d'au moins une donnée environnementale (162) et une donnée de mode de conduite (164);
la détermination (904), par le processeur (150), d'un état opérationnel d'un dispositif d'aspiration (110) en tant que sortie, dans lequel l'état opérationnel du dispositif d'aspiration (110) comprend un état d'activation du dispositif d'aspiration (180) et un état de désactivation du dispositif d'aspiration (190); et
générer (906), par le processeur (150), des données de contrôle indiquant l'état opérationnel du dispositif d'aspiration (110) à un contrôleur, le contrôleur étant configuré pour faire fonctionner le dispositif d'aspiration (110), dans lequel les données environnementales (162) comprennent au moins l'une parmi des données météorologiques (166) et des données de pollution atmosphérique (168).

15. Produit de programme informatique comprenant des instructions logicielles installées sur celui-ci, de telle sorte que, lorsqu'il est exécuté sur le processeur (150), il exécute les étapes de la revendication 14.
